# EUROPEAN PATENT SPECIFICATION

(11) **EP 3 898 242 B1**
(45) Date of publication and mention of the grant of the patent: **02.08.2023**
(21) Application number: 19900664.4
(22) Date of filing: 29.04.2019
(51) Int. Cl.: B41F 15/16, B41F 15/18, F16M 11/00, B41F 15/36, B41L 13/02, F16M 11/04, F16M 11/18

(54) **SUPPORT WITH ADJUSTABLE WIDTH FOR STENCIL PRINTING**
TRÄGER MIT VERSTELLBARER BREITE FÜR SCHABLONENDRUCK
SUPPORT À LARGEUR RÉGLABLE POUR L'IMPRESSION PAR STENCIL

(30) Priority: 20.12.2018 HU 1800224 U
(43) Date of publication of application: 27.10.2021
(73) Proprietor: Forgách, Dénes István, 3394 Egerszalók (HU); Csufor, Csaba, Zsolt, 3390 Füzesabony (HU)
(72) Inventor: Forgách, Dénes István, 3394 Egerszalók (HU); Csufor, Csaba, Zsolt, 3390 Füzesabony (HU)
(74) Representative: Danubia Patent & Law Office LLC
(86) International application number: PCT/HU2019/000008
(87) International publication number: WO 2020/128540

(56) References cited:
- WO-A1-2017/090069
- JP-A- 2015 012 095
- JP-A- 2016 198 991
- US-A1- 2009 295 053

## Description

The subject of the invention is a support with adjustable width for stencil printing suitable for use for stencil printing in small batch production of printed wiring plates.

There are several known solutions for adjustable width supporting of printed circuit boards including a solution most similar to the invention, described in the patent document with Publication Number US8505178B2. JP2015012095, JP2016198991 disclose adjustable frames for stencils.

The patent description with the Publication Number US8505178B2 describes a support with an adjustable width, including an upper support and a lower support fixed to the machine table with pins and magnets. The lower support includes three elongated supports of equal length shifted at right angle to the longitudinal direction related to each other. The upper support consists of separate supporting bands on each of the elongated supports. One of the exterior supports is fixed to the machine table, the other two supports are slidable. The central support is connected to the two exterior ones by a scissor mechanism. The scissor mechanism between the two adjacent supports is implemented as follows.
- There is a fixed joint with a vertical rotation axis on the supports each, and a guided joint each with a vertical rotation axis, slidable in longitudinal direction.
- The fixed joint of the first support is connected to the guided joint of the second support by an arm.
- The fixed joint of the second support is connected to the guided joint of the first support by another arm.
- The two arms are equal in length, and the two arms are connected in the middle by a joint with vertical axis.

The disadvantage of the solution described above is that there is a gap between the upper supporting bands, with its size depending on the width of the workpiece so it cannot be supported at every necessary point of the workpiece. In order to eliminate this disadvantage with the invention the upper support should be manufactured as one part in the necessary size.

In order to make the lower support able to be manufactured in the simplest possible way, the least possible, that is two longitudinal supports should be used to support the upper support.

In order to have the width of the lower support easily adjusted it is necessary to place a scale showing the width on the adjustable support, it is necessary to place a pointer in front of the scale on the guided joint of the adjustable support, and it is necessary to place two elevating mechanisms on the end of the adjustable support.

In order to easily fix the adjusted width of the lower support a clutch needs to be placed around the joint connecting the two arms.

The invention is therefore a support with adjustable width for stencil printing, in which a lower support is placed on the top of the machine table, on which an upper support is located. The machine table and the upper support are made of ferromagnetic material. The upper support is of width and shape necessary for supporting the given workpiece. There are bores on the top of the machine table and on the bottom of the upper support. The lower support is connected to the machine table and the upper support with pins and magnets. The width of the lower support is adjustable using the scissor mechanism. The lower support is connected to the machine table and the upper support with magnets and vertical pins. The lower support includes two elongated supports of the same length, with flat bottom and top. The elongated supports are shifted related to each other in a right angle to the longitudinal direction, horizontally. The elongated supports are connected to the upper support with magnets and pins protruding from their top. One of the two elongated supports is a fixed support. The other elongated support is an adjustable support. On the sides facing each other of the fixed support and the adjustable support there is a fixed joint each and a guided joint each slidable in the longitudinal direction. The fixed joint of the fixed support is connected by an arm to the guided joint of the adjustable support. The fixed joint of the adjustable support is connected by another hand to the guided joint of the fixed support. The length of the two arms is equal, and the centre of the two arms is connected by a joint. The axes of the fixed joints, the guided joints, and the joint connecting the two arms are vertical. The invention is also characterised by
- the fixed support is connected to the machine table by magnets and vertical pins protruding from the bottom downwards;
- the adjustable support is connected by magnets to the machine table;
- at least two magnets are recessed in the bottom and top of the elongated supports each, that is at least a total of eight magnets;
- one of the arms is located below the other arm, that is, one of the arms is a lower arm, the other arm is an upper arm;
- magnets are recessed in the bottom and top of the fixed support and the adjustable support;
- an elevating mechanism is located on each of the two ends of the adjustable support, which is suitable for increasing the air gap below the magnets;
- threaded bores are located on the top of the fixed support and the adjustable support;
- an elongated, replaceable positioning pad is recessed into the bottom of the fixed support, and it is connected by a bolted joint;
- at least two pins protrude downwards from the bottom of the positioning pad;
- on the bottom of the upper support above the fixed support bores are located, matching the pins protruding from the top of the fixed support;
- grooves are located on the bottom of the upper support above the adjustable support, matching the pins protruding from the top of the adjustable support;
- the grooves on the bottom of the upper support are straight and parallel to the movement direction of the adjustable support;
- the guided joint of the fixed support is connected by a linear bearing to a joint guiding shaft fixed to the fixed support and parallel to its longest edge;
- the guided joint of the adjustable support is connected by a linear bearing to a joint guiding shaft fixed to the adjustable support and parallel to its longest edge;
- the joint connecting the two arms includes a clutch;
- the joint connecting the two arms includes a bearing housing each in both arms, in which a friction bearing is loosely fitted.

In the first preferred embodiment of the support with adjustable width for stencil printing according to the invention the clutch includes clutch lamellas, a clutch-shaft and a clutch fastener. The clutch lamellas are in two circular grooves which are located on the sides facing each other of the two arms, around the bearing housing, concentric to them, opposing each other. The clutch lamellas are flexible, when they are unstressed there is a gap between the two arms. The clutch-shaft is a bolt with a head, an unthreaded part and a threaded part. The part of the clutch-shaft going through the two arms is unthreaded. The part of the clutch-shaft protruding beyond the upper arm is threaded. On the clutch fastener a threaded bore is situated connected to the threaded part of the clutch-shaft. Between the head of the clutch-shaft and the bottom surface of the lower arm, and between the clutch fastener and the upper arm on the clutch-shaft a washer is placed each.

In the second preferred embodiment of the support with adjustable width for stencil printing according to the invention both of the elevating mechanisms are characterised by the following. The elevating mechanism includes a lift arm with joint support between the two ends, which has a force input end and a loaded end. On the loaded end of the lift arm a rolling contact bearing is placed. On the loaded end of the lift arm a rolling contact bearing is located. The shaft of the rolling contact bearing and the shaft of the joint supporting the lift arm are parallel with the longitudinal edge of the adjustable support. At the force input end of the lift arm a pushbutton is located. The shaft of the joint supporting the lift arm is fixed to the lower end of a lift holder. The lift holder is fixed to the inner side of the adjustable support with bolted joint. The loaded end of the lift arm is located in a cavity open downwards and inwards, cut in the bottom of the adjustable support. The pushbutton and the inner side of the adjustable support are separated by a spring. When the spring is unloaded the bottom of the rolling contact bearing is higher than the bottom of the adjustable support. When the spring is compressed the bottom of the rolling contact bearing is lower than the bottom of the adjustable support.

In the third preferred embodiment of the support with adjustable width for stencil printing according to the invention are characterised by the following. The lift arm consists of two L-shaped plates, which encase the lift holder, the pushbutton and the rolling contact bearing. The force input end of the lift arm is at the end of the longer arm of the L-shaped plates, where the pushbutton is connected by a bolted joint to the L-shaped plate. The shaft of the joint supporting the lift arm goes through the L-shaped plates where their two arms meet.

In the fourth preferred embodiment of the support with adjustable width for stencil printing according to the invention are characterised by the following. A pointer is fixed to the guided joint connected to the adjustable support. The pointer has got a fixing surface and a tip protruding from the fixing surface. The tip of the pointer is close to the adjustable support. On the inner side of the adjustable support, above the guided joint, between the tip of the pointer and the adjustable support a scale is located. The scale points show where the tip of the pointer is when the width of the lower support is the value of the scale graduation.

The further preferred embodiment of the support with adjustable width for stencil printing according to the invention can have the characteristics of one or more of the above preferred embodiments.

A preferred embodiment of the invention is shown based on figures, where
- Figure 1 is the front view of a preferred embodiment of the support with adjustable width for stencil printing according to the invention
- Figure 2 is the axonometric view of a preferred embodiment of the support with adjustable width for stencil printing according to the invention, askew from above
- Figure 3 is the axonometric view of the lower support of a preferred embodiment of the support with adjustable width for stencil printing according to the invention, askew from above
- Figure 4 is the axonometric view of the lower support of a preferred embodiment of the support with adjustable width for stencil printing according to the invention, askew from below
- Figure 5 is the top-view of the lower support of a preferred embodiment of the support with adjustable width for stencil printing according to the invention
- Figure 6 is the axonometric view of one of the elevating mechanisms of a preferred embodiment of the support with adjustable width for stencil printing according to the invention, askew from below
- Figure 7 is the front view of the other elevating mechanism of a preferred embodiment of the support with adjustable width for stencil printing according to the invention
- Figure 8 is the cross-section along line A-A shown on Figure 5 of the other elevating mechanism of a preferred embodiment of the support with adjustable width for stencil printing according to the invention
- Figure 9 is the cross-section along line B-B shown on Figure 5 of the clutch of a preferred embodiment of the support with adjustable width for stencil printing according to the invention

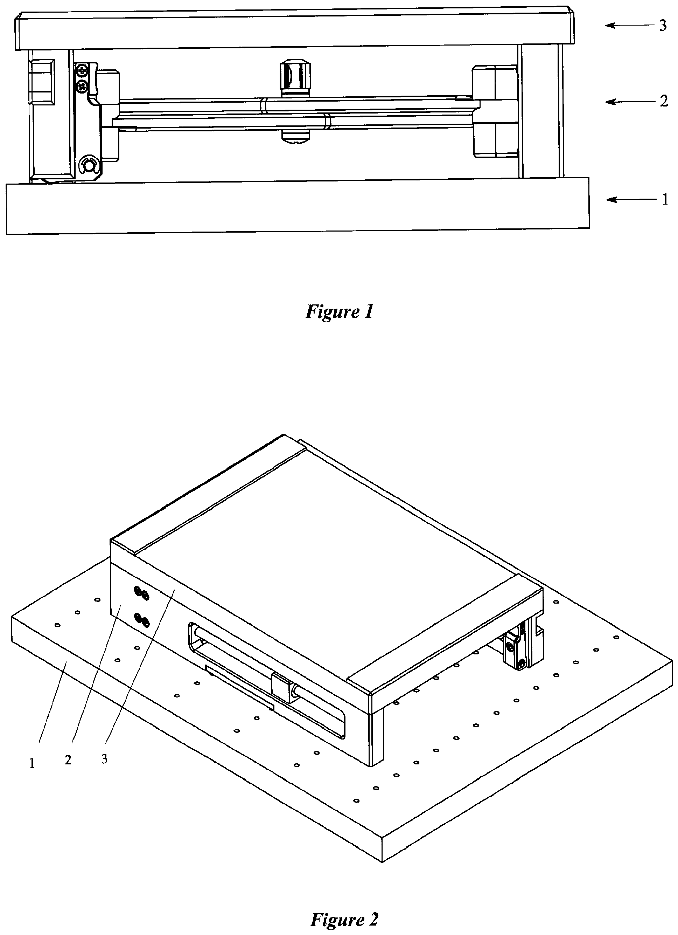

Figures 1 and 2 show that in a preferred embodiment of the support with adjustable width for stencil printing according to the invention the lower support 2 is located on the top of the machine table 1, and the upper support 3 is on top of that. Furthermore, Figure 2 shows that on the top of the machine table 1 bores are located for connecting the lower support 2.

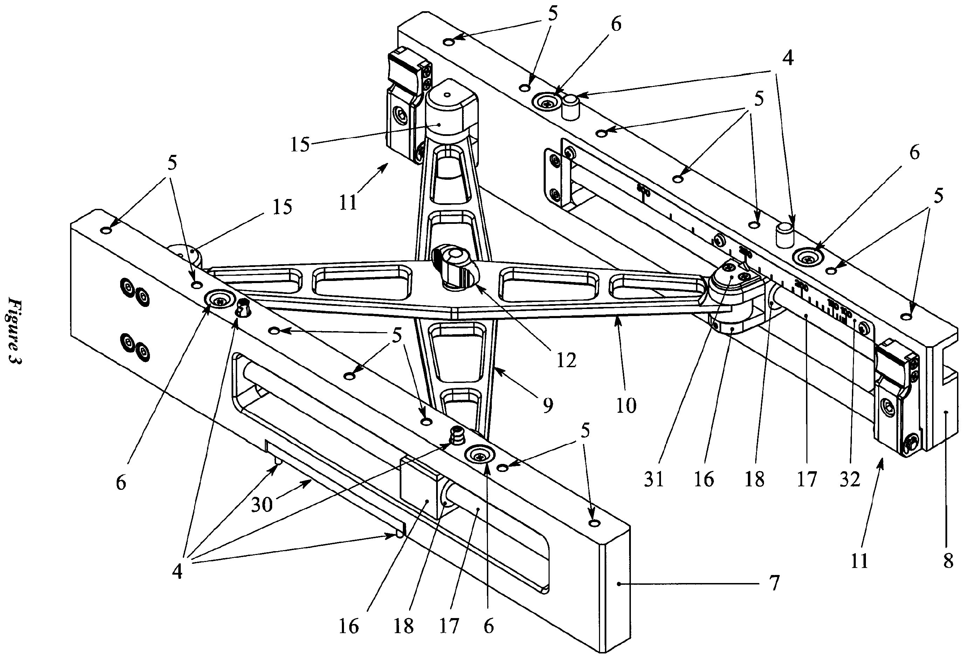

Figure 3 shows that in the preferred embodiment the fixed support 7 and the adjustable support 8 are each a rectangular solid shaped elongated support with flat top. The elongated supports are shifted related to each other in a right angle to the longitudinal direction, horizontally. On top of the elongated supports magnets 6 are recessed, on the top threaded bores 5 are located, and pins 4 protrude from the top. On the sides facing each other of the fixed support 7 and the adjustable support 8 there is a fixed joint 15 each and a guided joint 16 each slidable in the longitudinal direction. The fixed joints 15 of the fixed support 7 are connected by the upper arm 10 to the guided joint 16 of the adjustable support 8. The fixed joint 15 of the adjustable support 8 is connected by the lower arm 9 to the guided joint 16 of the fixed support 7. The length of the two arms 9,10 is equal, and the two arms 9,10 are connected by a joint at the centre. The shafts of the fixed joints 15, the guided joints 16 and the joint connecting the two arms 9,10 are vertical. Furthermore, Figure 3 shows that the clutch fastener 12 is connected from above to the joint connecting the two arms 9,10. An elevating 11 mechanism each is connected to the inner sides of the two ends of the adjustable support 8. It is also shown that a scale 32 is fixed to the inner side of the adjustable support 8 with the pointer tip 31 in front, and the pointer 31 is fixed to the guided joint 16 of the adjustable support 8. It is also shown that the guided joints 16 are connected by a linear bearing 18 each to each joint guiding shaft 17, which are fixed by shaft clamps fixed to the elongated supports 7,8 by bolts.

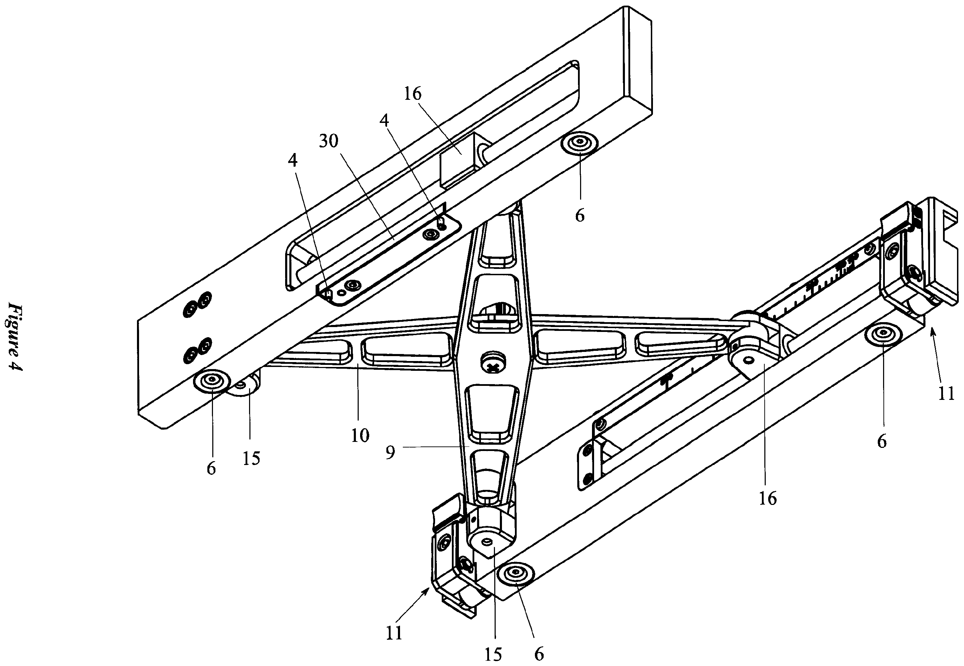

Figure 4 shows that in the preferred embodiment shown the at the two ends of the bottom of the fixed 7 support and the adjustable support 8 a recessed, bolted magnet 6 is located each. Furthermore, in the bottom of the fixed support 7 a bolted, elongated positioning pad 30 is recessed, from the bottom of which pins 4 protrude downwards.

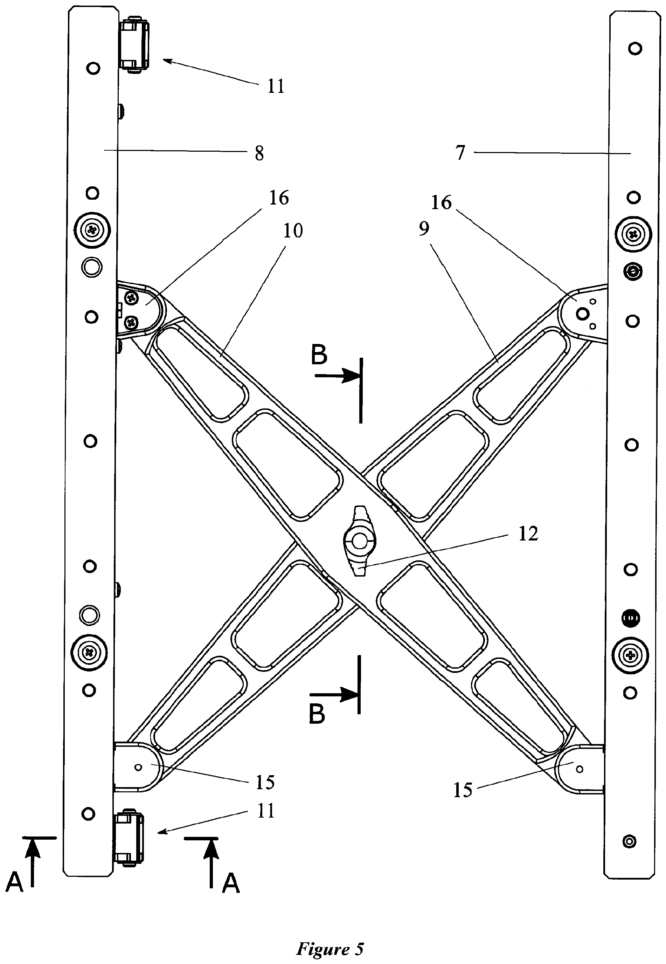

Figure 5 shows that in the preferred embodiment shown the section line marked A-A is a line at right angle to the longitudinal direction of the elongated supports 7,8, which crosses the centre of the elevating mechanism 11; while the section line marked B-B is a line parallel to the longitudinal direction of the elongated supports 7,8, going across the centre of the joint connecting the lower arm 9 and the upper arm 10.

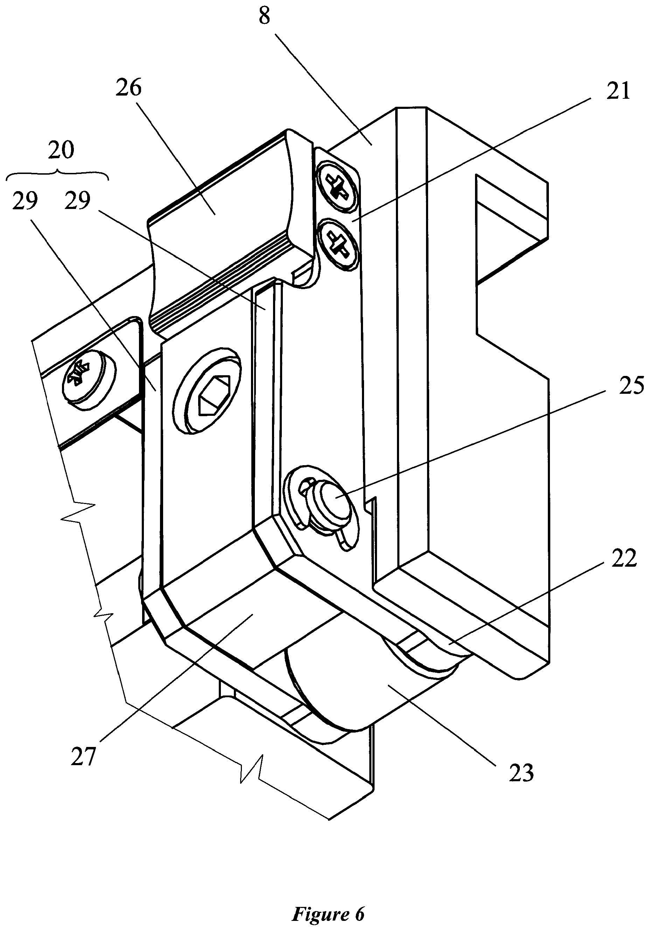

Figure 6 shows that in the preferred embodiment shown the lift arm 20 consists of two L-shaped plates 29. The lift arm 20 has got two legs perpendicular to each other with a force input end 21 and a loaded end 22. On the loaded end 22 of the lift arm 20 the two L-shaped plates 29 encase the rolling contact bearing 23. Furthermore, the two L-shaped plates 29 encase the lift holder 27 and the pushbutton 26 at the force input end 21 of the lift arm 20, which is connected by bolts to the L-shaped plates 29. At the bottom of the adjustable support 8 a rectangular solid shaped cavity open from below, from the inside and from the outside is located, in which the loaded end 22 of the lift arm 20 fits together with the rolling contact bearing 23. The corner of the L-shaped plates 29 is crossed by the shaft 25 of the joint supporting the lift arm 20.

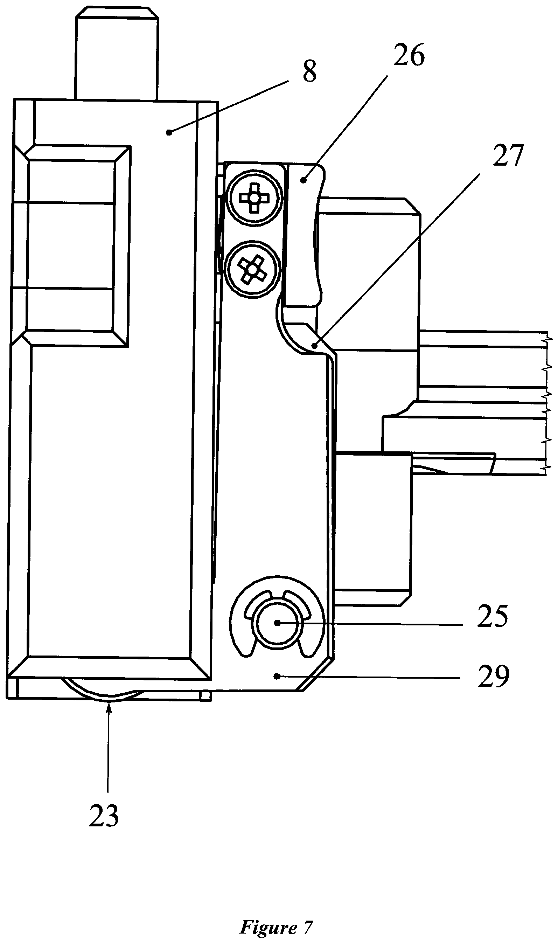

Figure 7 shows that in the preferred embodiment shown the shaft 25 of the joint supporting the lift arm 20 is parallel to the longitudinal direction of the adjustable support 8, and the diameter of the rolling contact bearing 23 is larger than the width of the ends of the L-shaped plates 29.

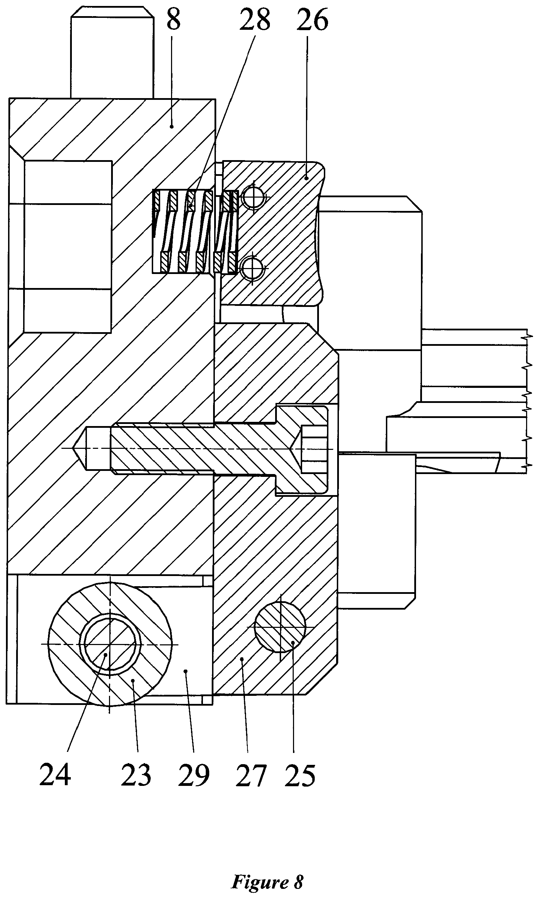

Figure 8 shows that in the preferred embodiment shown the inner side of the adjustable support 8 includes a bore, in which a spring 28 is recessed, supporting the pushbutton 26. It is also shown that the inner side of the adjustable support 8 includes a threaded bore, to which the lift holder 27 is bolted, and through which the shaft 25 of the joint supporting the lift arm goes through. It is also shown that the rolling contact bearing 23 is situated on a shaft 24 located between L-shaped plates 29.

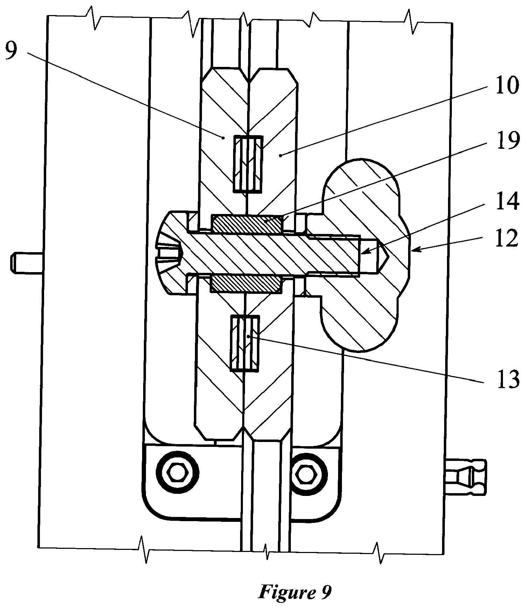

Figure 9 shows that in the preferred embodiment shown the lower arm 9 and the upper arm 10 include a bearing housing each, with a friction bearing 19 in them, and the friction bearing is on the clutch-shaft 14, on the lower end of which a bolt head, and on the upper end of which a thread is found, to which thread the nut thread of the clutch fastener 12 is connected. The bolt head and the clutch fastener 12 encase the arms 9,10 with a washer each. There are clutch lamellas 13 in two circular grooves which are located on the sides facing each other of the two arms 9,10, around the clutch-shaft 14.

In a certain preferred embodiment of the support with adjustable width for stencil printing according to the invention the width of the lower support 2 is adjustable between 100 and 300 millimetres. A scale 32 is located on the adjustable support 8, with ten millimetre division and above every fifth mark the width index number is given in millimetres. The edges of the fixed support 7 and the adjustable support 8 are chamfered. On the top of the fixed support 7 and the adjustable support 8 seven threaded bores 5 are located each, evenly distributed along its length. The joint guiding shafts 17 are fixed to the ends of elongated cavities, horizontally going through the fixed support 7 and the adjustable support 8.

The technical advantages of the support with adjustable width for stencil printing according to the invention are as follows:
- The clutch fastener 12 and the clutch lamellas 13 allow for the rotation friction resistance between the lower arm 9 and upper arm 10 to be adjusted to easily fix the width of the lower support 2.
- The lower support 2 consists of only two elongated supports 7,8, making it easier to be manufactured.
- With the help of the scale 32 and the pointer 31 the width of the lower support 2 is easily adjusted without any measuring gauge.
- The two elevating mechanisms 11 facilitate the adjustment of the width of the lower support 2 as by lifting the adjustable support 8 the air gap below the magnets 6 increases, the magnetic drag decreases, and the adjustable support 8 is easily rolled on the rolling contact bearing 23.
- Due to the positioning pad 30 the fixed support 7 can be repaired without replacing the fixed support 7 when the pins 4 protruding from its bottom become worn. Since these pins 4 are subject to significant mechanical use the replacement of the positioning pad 30 can frequently become necessary.

### List of reference numbers

| | | | |
|---|---|---|---|
| 1- | machine table | 17- | joint guiding shafts |
| 2- | lower support | 18- | linear bearings |
| 3- | upper support | 19- | friction bearing |
| 4- | pins | 20- | lift arm |
| 5- | threaded bores | 21- | force input end of the lift arm |
| 6- | magnets | 22- | loaded end of the lift arm |
| 7- | fixed support | 23- | rolling contact bearing |
| 8- | adjustable support | 24- | shaft of the rolling contact bearing |
| 9- | lower arm | 25- | shaft of the joint supporting the lift arm |
| 10- | upper arm | 26- | pushbutton |
| 11- | elevating mechanism | 27- | lift holder |
| 12- | clutch fastener | 28- | spring |
| 13- | clutch lamellas | 29- | L-shaped plates |
| 14- | clutch-shaft | 30- | positioning pad |
| 15- | fixed joints | 31- | pointer |
| 16- | guided joints | 32- | scale |

## Claims

1. Support for stencil printing, with adjustable width, in which
- a lower support (2) is located on the top of a machine table (1), with an upper support (3) on top;
- the machine table (1) and the upper support (3) are made of ferromagnetic material;
- the width and the top shape of the upper support (3) are formed for supporting a specific workpiece;
- on the top of the machine table (1) and on the bottom of the upper support (3) bores are located;
- the lower support (2) is fixed to the machine table (1) and to the upper support (3) by pins (4) and magnets (6);
- the width of the lower support (2) is adjustable with a scissor mechanism;
- the lower support (2) is connected to the machine table (1) and to the upper support (3) by vertical pins (4);
- the lower support (2) includes two elongated supports of the same length, with flat bottom and top;
- the elongated supports are shifted related to each other at right angle longwise, horizontally;
- the elongated supports are connected to the upper support (3) with magnets (6) and pins (4) protruding from their top;
- one of the two elongated supports is a fixed support (7);
- the other elongated support is an adjustable support (8);
- a fixed joint (15) is located on the sides facing each other of the fixed support (7) and the adjustable support (8) each, together with a guided joint (16) longitudinally traversable each;
- the fixed joint (15) of the fixed support (7) is connected by an arm to the guided joint (16) of the adjustable support (8);
- the fixed joint (15) of the adjustable support (8) is connected by another arm to the guided joint (16) of the fixed support (7);
- the lengths of the two arms are equal, and the middle of the two arms are connected by a joint;
- the fixed joints (15), the guided joints (16) and the shaft of the joint connecting the two arms are vertical;
***characterised in that***
- the bottom and top sides of the elongated supports (7,8) have got recessed magnets (6) at least two each, that is a total of at least eight pieces;
- on the two ends of the adjustable support (8) an elevating mechanism (11) allows for increasing the air gap below the magnets (6);
- one of the arms (9) is located below the other arm (10), that is, one of the arms is a lower arm (9) and the other arm is an upper arm (10);
- on top of the fixed support (7) and the adjustable support (8) pins (4) and threaded bores (5) are located;
- in the bottom of the fixed support (7) an elongated, replaceable positioning pad (30) is recessed and connected by a bolted joint;
- from the bottom of the positioning pad (30) at least two pins (4) protrude downwards;
- on the bottom of the upper support (3) above the fixed support (7) bores are located, which match the pins (4) protruding from the top of the fixed support (7);
- on the bottom of the upper support (3) above the adjustable support (8) grooves are located matching the pins (4) protruding from the top of the adjustable support (8);
- the grooves on the bottom of the upper support (3) are straight and parallel to the direction of displacement of the adjustable support (8);
- the guided joint (16) of the fixed support (7) is connected by a linear bearing (18) to a joint guiding shaft (17), which is fixed to the fixed support (7) parallel to its longest edge;
- the guided joint (16) of the adjustable support (8) is connected by a linear bearing (18) to a joint guiding shaft (17), which is fixed to the adjustable support (8) parallel to its longest edge;
- the joint connecting the two arms (9,10) include a clutch, and
- the joint connecting the two arms (9,10) include a bearing housing each within each arm (9,10), in which a friction bearing (19) is loosely fitted.

2. The support with adjustable width for stencil printing according to claim 1 ***characterised in that***
- the clutch includes clutch lamellas (13), a clutch-shaft (14) and a clutch fastener (12);
- the clutch lamellas (13) are in two circular grooves which are situated facing each other around the bearing housings on the sides facing each other of the two arms (9,10);
- the clutch lamellas (13) are flexible, when they are unstressed there is a gap between the two arms (9,10);
- the clutch-shaft (14) is a bolt with a head, an unthreaded part and a threaded part;
- the part of the clutch-shaft (14) going through the two arms (9,10) is unthreaded;
- the part of the clutch-shaft (14) protruding beyond the upper arm (10) is threaded;
- on the clutch fastener (12) a threaded bore is situated connected to the threaded part of the clutch-shaft (14); furthermore
- between the head of the clutch-shaft (14) and the bottom surface of the lower arm (9), and between the clutch fastener (12) and the upper arm (10) on the clutch-shaft (14) a washer is placed each.

3. The support with adjustable width for stencil printing according to any of claim 1 or 2 ***characterised in that*** both elevating mechanisms (11) are **characterised by** the following
- the elevating mechanism (11) includes a lift arm (20) with joint support between the two ends, which has a force input end (21) and a loaded end (22);
- on the loaded end (22) of the lift arm a rolling contact bearing (23) is placed,
- the shaft (24) of the rolling contact bearing and the shaft (25) of the joint supporting the lift arm are parallel with the longitudinal edge of the adjustable support (8);
- at the force input end (21) of the lift arm a pushbutton (26) is located,
- the shaft (25) of the joint supporting the lift arm is fixed to the lower end of a lift holder (27),
- the lift holder (27) is fixed to the inner side of the adjustable support (8) with bolted joint,
- the loaded end (22) of the lift arm is located in a cavity open downwards and inwards, cut in the bottom of the adjustable support (8),
- the pushbutton (26) and the inner side of the adjustable support (8) are separated by a spring (28),
- when the spring (28) is unloaded the bottom of the rolling contact bearing (23) is higher than the bottom of the adjustable support (8); furthermore
- when the spring (28) is compressed the bottom of the rolling contact bearing (23) is lower than the bottom of the adjustable support (8).

4. The support with adjustable width for stencil printing according to claim 3 ***characterised in that***
- the lift arm (20) consists of two L-shaped plates (29) which encase the lift holder (27), the pushbutton (26) and the rolling contact bearing (23);
- the force input end (21) of the lift arm is at the end of the longer arm of the L-shaped plate (29), where the pushbutton (26) is connected by a bolted joint to the L-shaped plate (29); furthermore,
- the shaft (25) of the joint supporting the lift arm goes through the L-shaped plates (29) where their two arms meet.

5. The support with adjustable width for stencil printing according to any of claims 1 to 4 ***characterised in that***
- a pointer (31) is fixed to the guided joint (16) connected to the adjustable support (8);
- the pointer (31) has got a fixing surface and a tip protruding from the fixing surface;
- the tip of the pointer (31) is close to the adjustable support (8);
- on the inner side of the adjustable support (8), above the guided joint (16), between the tip of the pointer (31) and the adjustable support (8) a scale (32) is located; furthermore,
- the scale (32) points show where the tip of the pointer (31) is when the width of the lower support (2) is the value of the scale graduation.

## Patentansprüche

1. Träger mit einstellbarer Breite für Schablonendruck, in dem
- auf der Oberseite eines Maschinentisches (1) eine untere Stütze (2) angeordnet ist, auf deren Oberseite sich eine obere Stütze (3) befindet;
- der Maschinentisch (1) und die obere Stütze (3) aus ferromagnetischem Material bestehen;
- die Breite und die obere Form der oberen Stütze (3) zum Stützen eines jeweiligen Werkstücks ausgebildet sind;
- auf der Oberseite des Maschinentisches (1) und auf der Unterseite der oberen Stütze (3) Bohrungen angebracht sind;
- die untere Stütze (2) mit Stiften (4) und Magneten (6) am Maschinentisch (1) und an der oberen Stütze (3) befestigt ist;
- die Breite der unteren Stütze (2) mit einem Scherenmechanismus verstellbar ist;
- die untere Stütze (2) durch vertikale Stifte (4) mit dem Maschinentisch (1) und mit der oberen Stütze (3) verbunden ist;
- die untere Stütze (2) zwei längliche Stützen gleicher Länge mit flacher Unterseite und Oberseite umfasst;
- die länglichen Stützen im rechten Winkel in Längsrichtung und horizontal zueinander verschoben werden können;
- die länglichen Stützen über Magnete (6) und Stifte (4), die von ihren Oberseiten abstehen, mit der oberen Stütze (3) verbunden sind;
- eine der beiden länglichen Stütze eine feste Stütze (7) ist;
- die andere längliche Stütze eine verstellbare Stütze (8) ist;
- an den einander zugewandten Seiten der festen Stütze (7) und der verstellbaren Stütze (8) jeweils ein festes Gelenk (15) sowie jeweils ein längsverfahrbares Führungsgelenk (16) angebracht sind;
- das feste Gelenk (15) der festen Stütze (7) über einen Arm mit dem geführten Gelenk (16) der verstellbaren Stütze (8) verbunden ist;
- das feste Gelenk (15) der verstellbaren Stütze (8) über einen anderen Arm mit dem geführten Gelenk (16) der festen Stütze (7) verbunden ist;
- die Länge der beiden Arme gleich ist und die Mitte beider Arme durch ein Gelenk verbunden ist;
- die festen Gelenke (15), die geführten Gelenke (16) und der Schaft des die beiden Arme verbindenden Gelenks vertikal sind;
**dadurch gekennzeichnet, dass**
- die Unter- und Oberseite der länglichen Stützen (7, 8) jeweils mit mindestens zwei, also insgesamt mindestens acht Stück, eingelassenen Magneten (6) versehen sind;
- an den beiden Enden der verstellbaren Stütze (8) ein Hebemechanismus (11) eine Erhöhung des Luftspalts unter den Magneten (6) ermöglicht;
- einer der Arme (9) unterhalb des anderen Arms (10) liegt, das heißt, einer der Arme ein Unterarm (9) und der andere Arm ein Oberarm (10) ist;
- an der Oberseite der festen Stütze (7) und der verstellbaren Stütze (8) sich Stifte (4) und Gewindebohrungen (5) befinden;
- in der Unterseite der festen Stütze (7) eine längliche, auswechselbare Positionierungsplatte (30) eingelassen und mittels einer Schraubverbindung verbunden ist;
- von der Unterseite des Positionierungsplatte (30) mindestens zwei Stifte (4) nach unten herausragen;
- an der Unterseite der oberen Stütze (3) oberhalb der festen Stütze (7) Bohrungen angebracht sind, die zu den Stiften (4) passen, die aus der Oberseite der festen Stütze (7) herausragen;
- auf der Unterseite der oberen Stütze (3) über der verstellbaren Stütze (8) Nuten angebracht sind, die zu den Stiften (4) passen, die aus der Oberseite der verstellbaren Stütze (8) herausragen;
- die Nuten an der Unterseite der oberen Stütze (3) gerade und parallel zur Verschiebungsrichtung der verstellbaren Stütze (8) verlaufen;
- das geführte Gelenk (16) der festen Stütze (7) über ein Linearlager (18) mit einer Gelenkführungswelle (17) verbunden ist, die parallel zu ihrer längsten Kante an der festen Stütze (7) befestigt ist;
- das geführte Gelenk (16) der verstellbaren Stütze (8) über ein Linearlager (18) mit einer Gelenkführungswelle (17) verbunden ist, die parallel zu ihrer längsten Kante an der verstellbaren Stütze (8) befestigt ist;
- das die beiden Arme (9, 10) verbindende Gelenk eine Kupplung umfasst, und
- das die beiden Arme (9,10) verbindende Gelenk jeweils ein Lagergehäuse innerhalb jedes Arms (9,10) umfasst, in dem ein Gleitlager (19) lose eingepasst ist.

2. Der Träger mit einstellbarer Breite für Schablonendruck nach Anspruch 1, **dadurch gekennzeichnet, dass**
- die Kupplung Kupplungslamellen (13), eine Kupplungswelle (14) und eine Kupplungsklammer (12) umfasst;
- die Kupplungslamellen (13) sich in zwei kreisförmigen Nuten befinden, die einander zugewandt um die Lagergehäusen herum auf den einander zugewandten Seiten der beiden Arme (9, 10) angeordnet sind;
- die Kupplungslamellen (13) flexibel sind, und im unbelasteten Zustand zwischen den beiden Armen (9,10) ein Spalt besteht;
- die Kupplungswelle (14) eine Schraube mit einem Kopf, einem gewindelosen Teil und einem Teil mit Gewinde ist;
- der Teil der Kupplungswelle (14), der durch die beiden Arme (9,10) verläuft, gewindelos ist;
- der Teil der Kupplungswelle (14), der über den oberen Arm (10) hinausragt, mit einem Gewinde versehen ist;
- an der Kupplungsklammer (12) eine Gewindebohrung ausgebildet ist, die mit dem mit einem Gewinde versehenen Teil der Kupplungswelle (14) verbunden ist; ferner
- zwischen dem Kopf der Kupplungswelle (14) und der Unterseite des unteren Arms (9) und zwischen der Kupplungsbefestigung (12) und dem oberen Arm (10) auf der Kupplungswelle (14) jeweils eine Unterlegscheibe angeordnet ist.

3. Der Träger mit einstellbarer Breite für Schablonendruck nach Anspruch 1 oder 2, **dadurch gekennzeichnet, dass** beide Hebemechanismen (11) durch Folgendes gekennzeichnet sind:
- der Hubmechanismus (11) umfasst einen Hubarm (20) mit Gelenkhalterung zwischen den beiden Enden, der ein Krafteingangsende (21) und ein belastetes Ende (22) aufweist;
- am belasteten Ende (22) des Hubarms ist ein Wälzlager (23) angebracht,
- die Welle (24) des Wälzlagers und die Welle (25) des Gelenks, das den Hubarm trägt, verlaufen parallel zur Längskante der verstellbaren Stütze (8);
- am Krafteingangsende (21) des Hubarms befindet sich ein Druckknopf (26),
- die Welle (25) des den Hubarm tragenden Gelenks ist am unteren Ende eines Hubhalters (27) befestigt,
- der Hubhalter (27) ist an der Innenseite der verstellbaren Stütze (8) mit einer Schraubverbindung befestigt,
- das belastete Ende (22) des Hubarms befindet sich in einem nach unten und innen offenen Hohlraum, der in den Boden der verstellbaren Stütze (8) eingeschnitten ist,
- der Druckknopf (26) und die Innenseite der verstellbaren Stütze (8) sind durch eine Feder (28) getrennt,
- wenn die Feder (28) entlastet ist, liegt die Unterseite des Wälzlagers (23) höher als die Unterseite der verstellbaren Stütze (8); ferner
- wenn die Feder (28) zusammengedrückt ist, liegt die Unterseite des Wälzlagers (23) tiefer als die Unterseite der verstellbaren Stütze (8).

4. Der Träger mit einstellbarer Breite für Schablonendruck nach Anspruch 3, **dadurch gekennzeichnet, dass**
- der Hubarm (20) aus zwei L-förmigen Platten (29) besteht, die den Hubhalter (27), den Druckknopf (26) und das Wälzlager (23) umschließen;
- das Krafteingangsende (21) des Hubarms sich am Ende des längeren Arms der L-förmigen Platte (29) befindet, wo der Druckknopf (26) durch eine Schraubverbindung mit der L-förmigen Platte (29) verbunden ist; ferner
- die Welle (25) des Gelenks, das den Hubarm trägt, durch die L-förmigen Platten (29) verläuft, wo sich ihre beiden Arme treffen.

5. Der Träger mit einstellbarer Breite für Schablonendruck nach einem der Ansprüche 1 bis 4, **dadurch gekennzeichnet, dass**
- ein Zeiger (31) am Führungsgelenk (16) befestigt ist, das mit der verstellbaren Stütze (8) verbunden ist;
- der Zeiger (31) eine Befestigungsfläche und eine von der Befestigungsfläche abstehende Spitze hat;
- die Spitze des Zeigers (31) sich in der Nähe des verstellbaren Stützes (8) befindet;
- auf der Innenseite des verstellbaren Stützes (8) sich oberhalb des Führungsgelenks (16) zwischen der Spitze des Zeigers (31) und der verstellbaren Stütze (8) eine Skala (32) befindet; ferner
- Die Spitze des Zeigers (31) zeigt die Breite der unteren Stütze (2) entsprechend den Punkten der Skala (32) an.

## Revendications

1. Support de largeur réglable pour l'impression au pochoir, dans lequel
- un support inférieur (2) est agencé sur la face supérieure d'une table de machine (1), sur la face supérieure de laquelle se trouve un support supérieur (3);
- la table de machine (1) et le support supérieur (3) sont en matériau ferromagnétique ;
- la largeur et la forme supérieure du support supérieur (3) sont conçues pour supporter une pièce respective;
- sur le dessus de la table de machine (1) et sur le dessous du support supérieur (3) se trouvent des alésages;
- le support inférieur (2) est fixé à la table de la machine (1) et au support supérieur (3) avec des goupilles (4) et des aimants (6);
- la largeur du support inférieur (2) est réglable avec un mécanisme à ciseaux ;
- le support inférieur (2) est relié à la table de machine (1) et au support supérieur (3) par des goupilles (4) verticaux;
- le support inférieur (2) comprend deux supports allongés de même longueur avec un fond et un dessus plats;
- les supports allongés peuvent être déplacés longitudinalement et horizontalement à angle droit les uns par rapport aux autres;
- les supports allongés sont reliés au support supérieur (3) par l'intermédiaire d'aimants (6) et de goupilles (4) dépassant de leurs sommets;
- l'un des deux supports allongés est un support fixe (7);
- l'autre support allongé est un support réglable (8);
- sur les côtés en regard l'un de l'autre du support fixe (7) et du support réglable (8) ont chacun une articulation fixe (15) et une articulation guidée (16) mobile longitudinalement sont fixées;
- l'articulation fixe (15) du support fixe (7) est reliée par un bras à l'articulation guidée (16) du support réglable (8);
- l'articulation fixe (15) du support réglable (8) est reliée à l'articulation guidée (16) du support fixe (7) via un autre bras;
- les longueurs des deux bras sont égales, et le milieu des deux bras est relié par une articulation;
- les articulations fixes (15), les articulations guidées (16) et la tige de l'articulation reliant les deux bras sont verticales;
**caractérisé en ce que**
- le bas et le haut des supports allongés (7, 8) sont munis chacun d'au moins deux, c'est-à-dire au total au moins huit, aimants (6) encastrés;
- aux deux extrémités du support réglable (8), un mécanisme de levage (11) permet une augmentation de l'entrefer sous les aimants (6);
- l'un des bras (9) est en dessous de l'autre bras (10), c'est-à-dire que l'un des bras est un bras (9) inférieur et l'autre bras est un bras (10) supérieur;
- il y a des goupilles (4) et des trous filetés (5) sur le dessus du support fixe (7) et du support réglable (8);
- une plaque de positionnement (30) allongée et remplaçable est encastrée dans la face inférieure du support fixe (7) et fixée au moyen d'une connexion à vis;
- au moins deux goupilles (4) font saillie vers le bas depuis la face inférieure de la plaque de positionnement (30);
- sur la face inférieure du support supérieur (3) au-dessus du support fixe (7) sont percés des trous correspondant aux goupilles (4) dépassant du haut du support fixe (7);
sur la face inférieure du support supérieur (3) au-dessus du support réglable (8), il y a des rainures qui correspondent aux goupilles (4) dépassant du haut du support réglable (8);
- les rainures de la face inférieure du support supérieur (3) sont rectilignes et parallèles à la direction de déplacement du support réglable (8);
- l'articulation guidée (16) du support fixe (7) est reliée par l'intermédiaire d'un palier linéaire (18) à un arbre de guidage d'articulation (17) fixé au support fixe (7) parallèlement à son bord le plus long;
- l'articulation guidée (16) du support réglable (8) est reliée par l'intermédiaire d'un palier linéaire (18) à un arbre de guidage d'articulation (17) qui est fixé au support réglable (8) parallèlement à son bord le plus long;
- l'articulation reliant les deux bras (9, 10) comporte un accouplement, et
- l'articulation reliant les deux bras (9, 10) comporte un logement de palier à l'intérieur de chaque bras (9, 10), dans lequel un palier lisse à friction (19) est monté fou.

2. Support à largeur réglable pour impression au pochoir selon la revendication 1, **caractérisé en ce que**
- l'embrayage comprend des lamelles d'embrayage (13), un arbre d'embrayage (14) et une fixation d'embrayage (12);
- les lamelles d'embrayage (13) sont situés dans deux gorges circulaires disposées en vis-à-vis autour des logements de palier sur les côtés en regard des deux bras (9, 10);
- les lamelles d'embrayage (13) sont souples, et à l'état déchargé il existe un espace entre les deux bras (9, 10);
- l'arbre d'embrayage (14) est une vis avec une tête, une partie non filetée et une partie filetée;
- la partie de l'arbre d'embrayage (14) passant par les deux bras (9, 10) est non filetée ;
- la partie de l'arbre d'embrayage (14) dépassant du bras (10) supérieur est filetée ;
- un alésage fileté est formé sur la fixation d'embrayage (12) qui est relié à la partie filetée de l'arbre d'embrayage (14); en outre,
- une rondelle est disposée entre la tête de l'arbre d'embrayage (14) et le dessous du bras (9) inférieur et entre la fixation d'embrayage (12) et le bras (10) supérieur sur l'arbre d'embrayage (14) chacun.

3. Support à largeur réglable pour l'impression au pochoir selon l'une quelconque des revendications 1 ou 2, **caractérisé en ce que** les deux mécanismes de levage (11) sont **caractérisés par** ce qui suit
- le mécanisme de levage (11) comprend un bras de levage (20) avec un support d'articulation entre les deux extrémités, qui a une extrémité d'entrée de force (21) et une extrémité chargée (22);
- sur l'extrémité chargée (22) du bras de levage un roulement à rouleaux (23) est placé,
- l'arbre (24) du roulement à rouleaux et l'arbre (25) de l'articulation supportant le bras de levage sont parallèles au bord longitudinal du support réglable (8);
- il y a un bouton poussoir (26) à l'extrémité d'entrée de force (21) du bras de levage,
- l'arbre (25) de l'articulation supportant le bras de levage est fixé à l'extrémité inférieure d'une console de levage (27),
- la console de levage (27) est fixée à l'intérieur du support réglable (8) avec une liaison vissée,
- l'extrémité chargée (22) du bras de levage est située dans une cavité creusée dans le fond du support réglable (8), ouverte vers le bas et vers l'intérieur,
- le bouton poussoir (26) et l'intérieur du support réglable (8) sont séparés par un ressort (28),
- lorsque le ressort (28) est détendu, le roulement à rouleaux (23) est plus haut que le bas du support réglable (8) ; et
- lorsque le ressort (28) est comprimé, le roulement à rouleaux (23) est plus bas que le bas du support réglable (8).

4. Support à largeur réglable pour impression au pochoir selon la revendication 3 **caractérisé en ce que**
- le bras de levage (20) est constitué de deux plaques en forme de L (29) renfermant la potence de levage (27), le bouton poussoir (26) et le roulement à rouleaux (23) ;
- l'extrémité d'entrée de force (21) du bras de levage est à l'extrémité du bras le plus long de la plaque en forme de L (29), où le bouton-poussoir (26) est relié par un joint boulonné à la plaque en forme de L (29); en outre,
- l'arbre (25) de l'articulation portant le bras de levage traverse les plaques en L (29) à la rencontre de leurs deux bras.

5. Support à largeur réglable pour impression au pochoir selon l'une quelconque des revendications 1 à 4 **caractérisé en ce que**
- une aiguille (31) est fixée sur l'articulation guidée (16) reliée au support réglable (8) ;
- le aiguille (31) a une surface de fixation et une pointe dépassant de la surface de fixation;
- la pointe de l'aiguille (31) est proche du support réglable (8) ;
- sur le côté intérieur du support réglable (8), au-dessus de l'articulation guidé (16), entre la pointe de l'aiguille (31) et le support réglable (8) une échelle (32) est située; en outre,
- la pointe de l'aiguille (31) indique la largeur du support inférieur (2) selon les points de l'échelle (32).
